(19) Europäisches Patentamt

European Patent Office

Office européen des brevets

(11) **EP 1 095 921 A1**

(12) **EUROPÄISCHE PATENTANMELDUNG**

(43) Veröffentlichungstag:
02.05.2001 Patentblatt 2001/18

(51) Int Cl.⁷: **C04B 38/00**

(21) Anmeldenummer: **00810882.1**

(22) Anmeldetag: **26.09.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.10.1999 DE 19951453**

(71) Anmelder: **ALSTOM Power (Schweiz) AG**
**5401 Baden (CH)**

(72) Erfinder:
• **Carcer, Bruno**
**5000 Aarau (CH)**

• **Rüegg, Hans**
**5610 Wohlen (CH)**
• **Wieckert, Christian**
**5703 Seon (CH)**

(74) Vertreter: **Pöpper, Evamaria, Dr. et al**
**ALSTOM (Schweiz) AG**
**Intellectual Property CHSP**
**Haselstrasse 16/699, 5. Stock**
**5401 Baden (CH)**

(54) **Oxidische Mineralzusammensetzung für Mineralschaum**

(57) Die Erfindung betrifft eine oxidische Mineralzusammensetzung zur Herstellung eines temperaturbeständigen und verdichtbaren Mineralschaumes, sowie die Verwendung eines derartigen Schaumes. Die Mineralzusammensetzung ist gekennzeichnet durch (Angaben in Gew.-%):

10-32 Si
4-10 Al
2.5-15 Ca
1-12 Me, wobei Me = Fe und/oder Mn und/oder Cr und/oder Ti und/oder V

1-7.5 Na
0.5-5 Mg
0.3-8 K

Rest Sauerstoff und beliebige Begleitelemente in unbedeutenden Konzentrationen.

## Beschreibung

### Technisches Gebiet

Die Erfindung bezieht sich auf eine oxidische Mineralzusammensetzung aus Reststoffen zur Herstellung eines temperaturstabilen und verdichtbaren Mineralschaumes und auf die Einsatzgebiete eines derartigen Schaumes.

### Stand der Technik

Glasschaumverbindungen werden vielseitig eingesetzt und sind z. B. seit einigen Jahren ein geläufiges Produkt im Strassenbau. Diese Produkte werden bisher aus Altglas hergestellt und werden nach entsprechenden Aufbereitungsschritten wie Sortieren, Brechen, Mahlen und Vormischen mit einem Schäumungsmittel in einem Durchlaufofen erhitzt, wobei das Glaspulver erweicht und vom Schäumungsmittel gebläht wird.

Es ist bekannt, dass mineralische Schaumverbindungen eine wesentlich höhere Feuerbeständigkeit als die entsprechenden Glasschäume aufweisen, d.h. sie weisen eine hervorragende Temperaturstabilität auf. Mineralische Schäume widerstehen Temperaturen um 1000 °C, wohingegen Glasschäume nur bis ca. 650 °C temperaturstabil sind. Es ist überaus erwünscht, geschäumte Produkte mit einer Temperaturstabilität bis 1000 °C zu erzeugen. Diese können z. B. bei der Isolation von Gebäuden (Hinterfüllung von Aussenmauern) oder als Deckenschüttung mehrgeschossiger, unterkellerter Gebäude eingesetzt werden. Dabei weisen sie aufgrund der höheren Feuerbeständigkeit einen grossen Vorteil gegenüber Schäumen aus Altglas auf.

Das beständig wachsende Einsatzgebiet geschäumter Produkte stellte in der Vergangenheit zudem eine immer grössere Anforderung an deren Verdichtbarkeit. So ist für einzelne Anwendungen inzwischen eine Verdichtbarkeit von bis zu 30% erforderlich. Dabei darf das verdichtete Gut jedoch nicht unkontrolliert zerbrechen oder immer weiter auseinanderbröseln, sondern muss nach Einnehmen einer bestimmten Verdichtbarkeit im Gegenteil sehr form- und lagestabil sein. Dieser bei Schäumen aus Glas aufgrund des hohen $SiO_2$-Gehalts auftretende Effekt des kontrollierten Brechens wurde in der Vergangenheit bei mineralischen Schäumen aus Reststoffen, besonders bei grossflächigen Schüttungen, nicht erreicht.

### Darstellung der Erfindung

Die Erfindung liegt die Aufgabe zugrunde, Mineralzusammensetzungen zur Herstellung von mineralischen Schäumen zu beschreiben, welche aus Reststoffen erzeugt werden können, wobei die Schäume eine höhere Temperaturstabilität als Schäume aus Altglas aufweisen und ihre Verdichtbarkeit ähnlich gute Werte aufweist wie Glasschäume, d. h. sie sollen sich einmal bis ca. 30 % verdichten lassen, danach aber lagestabil bleiben. Die Schäume sollen gut transportierbar sein und eine hervorragende Feuerbeständigkeit aufweisen.

Erfindungsgemäss wird dies dadurch erreicht, dass die oxidische Mineralzusammensetzung zur Herstellung eines temperaturbeständigen und verdichtbaren Mineralschaumes durch folgende Konzentrationen gekennzeichnet ist (Angaben in Gew.-%):

10-32 Si
4-10 Al
2.5-15 Ca
1-12 Me, wobei Me = Fe und/oder Mn, und/oder Cr, und/oder Ti, und/oder V
1-7.5 Na
0.5-5 Mg
0.3-8 K

Rest Sauerstoff und beliebige Begleitelemente in unbedeutenden Konzentrationen. Innerhalb der angegebenen Bandbreiten kann die Konzentration der einzelnen Elemente so variieren, dass zusammen mit dem Sauerstoff und den Begleitelementen immer 100 % erreicht werden.

Bevorzugte Zusammensetzungen sind (Angaben in Gew.-%):

10-32 Si
4-10 Al
2.5-15 Ca
1-10 Me, wobei Me = Fe und/oder Mn, und/oder Cr, und/oder Ti, und/oder V
1-7.5 Na
0.5-5 Mg
0.3-8 K

Rest Sauerstoff und beliebige Begleitelemente in unbedeutenden Konzentrationen.

Eine weitere bevorzugte Zusammensetzung ist (Angaben in Gew.-%):

10-20 Si
6-9.5 Al
2.5-12 Ca
1-6 Me, wobei Me = Fe und/oder Mn, und/oder Cr, und/oder Ti, und/oder V
1-7.5 Na
0.5-3 Mg
2-8 K

Rest Sauerstoff und beliebige Begleitelemente in unbedeutenden Konzentrationen.

Die Vorteile der Erfindung bestehen darin, dass derartige Mineralzusammensetzungen aus Reststoffen, beispielsweise aus der Müllverbrennung, gewonnen werden können und die daraus hergestellten Schäume eine hervorragende Temperaturbeständigkeit und eine gute Verdichtbarkeit aufweisen. Erstaunlicherweise ist es gelungen, mit den beschriebenen Vorzügen versehene mineralische Schäume aus Reststoffen der Müllverbrennunganlagen zu erzeugen, denen ein billiges, in grossen Mengen verfügbares Additiv zugemischt wurde, wobei das Additiv aus Metalloxid, z. B. aus FeO und $Fe_2O_3$ oder MnO und $MnO_2$ oder einem im Schmelzfluss der Müllverbrennungsaschen stabilen Oxid besteht.

Es ist zweckmässig, wenn die Mineralzusammensetzung folgende totale Menge von Ca, Mg und Me (Angaben in Gew.%) enthält: $22 \leq Ca+Mg+Me \leq 35$, vorzugsweise sollte die untere Grenze bei 25 bzw. 28 Gew.-% liegen. Unter Me sind dabei wiederum mindestens eines der Elemente Fe, Mn, Cr, Ti, V oder Kombinationen aus diesen Elementen zu verstehen. Diese Elemente wirken schmelzpunkterniedrigend. Dies führt vorteilhaft zu einem geringeren Ofenverschleiss. Die Oxide der Metalle Me bewirken ausserdem die Umkristallisation und Stabilisierung der Ladung.

Ferner ist es vorteilhaft, wenn die Mineralzusammensetzung folgende totale Mengen von Mn, Cr, V, Ti und Fe aufweist: $1\% \leq Mn+Fe+Cr++Ti+V \leq 8$, vorzugsweise $\leq 5\%$.

Diese Mineralzusammensetzungen sind zur Herstellung eines Schaumes geeignet. Dabei ist eine Viskosität bei der Herstellung von ca. 0.5-6 Pas, vorzugsweise 0.5-3 Pas bzw. 0.5-1,5 Pas notwendig. Eine Viskosität kleiner 0.5 Pas ist unerwünscht, da der produzierte Schaum sonst eine grosse Poreninhomogenität aufweist oder sogar wieder in sich zusammenfällt. Dabei sind aus Verschleissgründen möglichst tiefe Ofentemperaturen erwünscht. Um überhaupt einen mineralischen Schaum aus Reststoffen zu erzeugen, ist deshalb die Viskosität in einem engen Rahmen zu halten. Dabei soll aus dem oben genannten Grund die Konzentration der viskositätserhöhenden Elemente (Silizium, Aluminium) nicht weiter erhöht werden. Diese kommen deshalb für die Verbesserung der Verdichtbarkeit nicht in Frage.

Demzufolge bedeutet die Viskosität, die für das Schäumen in einem engen Rahmen konstant sein muss, eine gewisse Einschränkung dafür, wie eine Schmelzzusammensetzung beeinflusst werden kann.

Es wird angenommen, dass die Höhe des Magnesium- und Me-Oxidgehaltes, z. B. des Eisen/Eisenoxid-Gehaltes, einen signifikanten Einfluss auf die Temperaturstabilität des mineralischen Schaums aus Reststoffen ausübt. Der Me/Me-Oxidgehalt spielt dabei die wichtige Rolle als Kristallisationskeim bei der Umwandlung des Mineralschaums vom amorphen in den kristallinen bzw. speudokristallinen Zustand während einer externen Erwärmung, z. B. durch einen Brand. Aus diesem Umstand resultiert eine gewisse Einschränkung hinsichtlich des minimalen Me-Oxidgehaltes, z. B. des Eisen/Eisenoxid-Gehaltes, in der Zusammensetzung. Es soll an dieser Stelle vermerkt werden, dass Mineralschäume ohne den entsprechenden Me-Oxidgehalt eventuell auch hohen Temperaturen widerstehen können, welche aber durch langsames Erwärmen auf den Schaum einwirken. Dies steht aber in starkem Kontrast zur unter Umständen explosionsartigen Hitzeentwicklung bei einem Brand. Wie vorgängig bemerkt ist es deshalb unerlässlich, dass ein dem Feuer ausgesetzter Mineralschaum einen Kristallisationskeim in Form von Me-Oxid, z. B. Eisen/Eisenoxid, aufweist, welcher die Umkristallisation des vorher amorphen Materials begünstigt, weil der Schaum seine Stabilität sonst schon wesentlich früher einbüsst. Um besagte Umkristallisation zu gewährleisten, sind Me-Oxidgehalte im einstelligen Prozentbereich nötig.

Dem Verhältnis der Summe der Aluminium- und Kalziumoxidgruppe zur Gesamtsumme der zugeschlagenen Me-Oxide wird zugeschrieben, dass es die Verdichtbarkeit bzw. das unkontrollierte Weiterzerbrechen massgeblich beeinflusst. Eine unkontrollierte Verdichtung, welche unter Beanspruchung über längere Zeit fortschreitet, stellt die am schwersten wiegende Einschränkung auf die spätere Verwendung eines Mineralschaums dar. Es ist klar, dass ein einmal verdichteter Mineralschaum aus Reststoffen danach über Jahre hinaus stabile Eigenschaften aufweisen muss, d. h. nicht verrotten oder sich nicht in andere Formen umwandeln darf. Gleichzeitig muss er bei seinem Einbau soweit verdichtbar sein, dass eventuelle Schüttungsunregelmässigkeiten zuverlässig ausgeglichen werden.

An den Korngrenzen von Aluminiumoxid und Kalziumoxid herrschen langzeitaktiven Bruchstellen vor, wobei sich die Ladungszustände der an der Bindung beteiligten Atome erst über einen längeren Zeitraum hinaus stabilisieren, d. h. es kommt erst nach Abschluss dieses Ladungsausgleichs zur Lagestabilität des Schüttguts. Dieser Effekt kann durch die Zugabe eines Me-Oxids (z.B. FeO resp. $Fe_2O_3$) oder einer Me-Oxidkombination (z.B. $Fe_2O_3$ und $MnO_2$) in gewissen Grenzen inhibiert werden.

## Kurze Beschreibung der Zeichnung

In der Zeichnung sind Ausführungsbeispiele der Erfindung dargestellt.

Es zeigen:

Fig. 1 ein Diagramm, in welchem die Abhängigkeit der Bruchgrenzenaktivität von der Mineralschaumzusammensetzung dargestellt ist;

Fig. 2 eine schematische Darstellung des Einsatzes des erfindungsgemässen Schaumes im Hochbau.

## Weg zur Ausführung der Erfindung

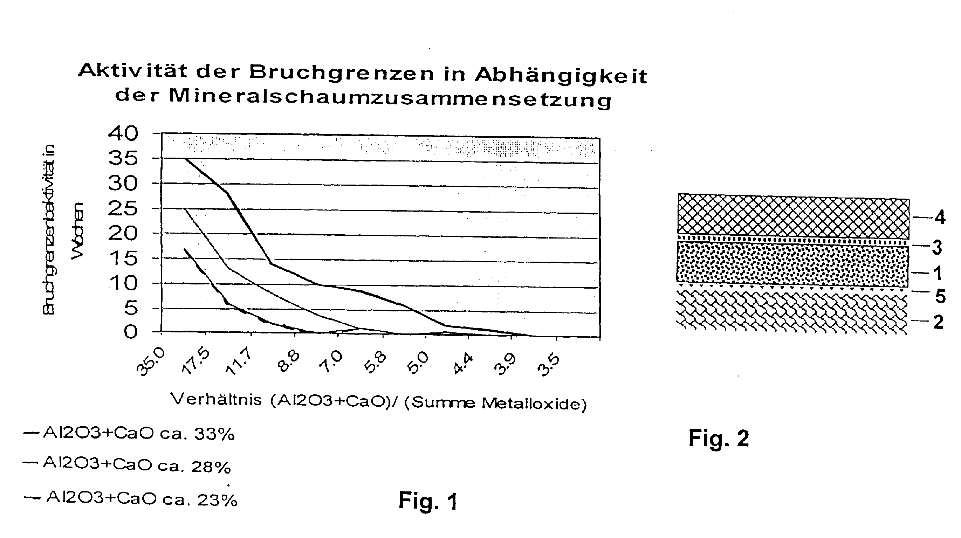

Nachfolgend wird die Erfindung anhand von Ausführungsbeispielen und der Fig. 1 und 2 näher erläutert.

In Fig. 1 ist die Abhängigkeit der Bruchgrenzenaktivität von der Mineralschaumzusammensetzung dargestellt. Die Bruchgrenzenaktivitäten des Mineralschaumes sind umso höher, je höher der Anteil an Al- und Ca-Oxiden ist bzw. je höher das Verhältnis von $(Al_2O_3 + CaO)$ zur Summe der Metalloxide ist.

Die Verdichtbarkeit bzw. das unkontrollierte Weiterzerbrechen eines Schaumes wird massgeblich vom Verhältnis der Summe der Aluminium- und Kalziumoxidgruppe zur Summe der zugeschlagenen Metalloxide bestimmt. Bekannt ist, dass an den Korngrenzen von Aluminiumoxid und Kalziumoxid langzeitaktiven Bruchstellen vorherrschen, wobei sich die Ladungszustände der an der Bindung beteiligten Atome erst über einen längeren Zeitraum hinaus stabilisieren, d. h. es kommt erst nach Abschluss dieses Ladungsausgleichs zur Lagestabilität des Schüttguts. Durch Versuche wurde nachgewiesen, dass dieser Effekt durch Zugabe eines Additives und zwar eines Metalloxids, z. B. FeO resp. $Fe_2O_3$, oder einer Metalloxidkombination, z. B. $Fe_2O_3$ und $MnO_2$, in gewissen Grenzen inhibiert werden kann. Es gibt einen klaren Zusammenhang zwischen dem Verhältnis der oben aufgeführten Elemente und der Langzeitaktivität eines einmal verdichteten Stoffes. Es wurden verschiedene Testschüttungen über einen längeren Zeitraum periodisch von neuem mit einem spezifischen Druck verdichtet. In Abhängigkeit der Verhältnisses von Aluminium- und Kalziumoxid zu den genannten Metalloxiden, d. h. den Oxiden von Fe, Mn, Cr, Ti und V, ist eine starke Veränderung der Aktivierungszeit zu beobachten.

So wurde beispielsweise eine Mineralschaumschüttung aus

     61.1 % $SiO_2$
     29.4 % $Al_2O_3$
     3.5 % CaO
     1.2 % FeO
     2.8 % $Na_2O$
     1.0 % MgO
     0.9 % $K_2O$

untersucht. Diese in Form der Oxide angegebenen Zusammensetzung entspricht folgender Zusammensetzung (Angaben in Gew.-%):

     28.6 Si
     7.8 Al
     1.5 Ca
     1.0 Fe
     1.0 Na
     0.6 Mg
     0.4 K.

Die genannte Mineralschaumschüttung wurde über einen Zeitraum von 29 Wochen zweimal wöchentlich 30 Minuten lang mit einem konstanten Druck von 5 $N/mm^2$ beaufschlagt und die dabei auftretende Reduktion der Schütthöhe gemessen. Nach 3 gleichbleibenden Messergebnissen wurden die Versuche abgebrochen, da kein unkontrolliertes Weiterzerbrechen des Schaumes mehr erfolgte.

In einem zweiten Ausführungsbeispiel wurde eine Mineralschaumschüttung mit folgender Zusammensetzung

     68.4 % $SiO_2$
     15.2 % $Al_2O_3$
     7.6 % CaO
     3.5 % FeO
     7.0 % $Na_2O$
     6,8 % MgO
     1.1 % $K_2O$

untersucht. Diese in Form der Oxide angegebene Zusammensetzung entspricht folgender Zusammensetzung (Angaben in Gew.-%):

     31.9 Si
     4.0 Al
     7.6 Ca
     2.7 Fe
     2.6 Na
     4.1 Mg
     0.5 K.

Diese Mineralschaumschüttung wurde über einen Zeitraum von 2 Wochen zweimal wöchentlich 30 Minuten lang mit einem konstanten Druck von 5 $N/mm^2$ beaufschlagt und die dabei auftretende Reduktion der Schütthöhe gemessen. Nach drei gleichbleibenden Messergebnissen wurden die Versuche abgebrochen, da kein unkontrolliertes Weiterzerbrechen des Schaumes mehr erfolgte.

Die Bruchgrenzenaktivität des Schaumes im ersten Ausführungsbeispiel ist also wesentlich höher als im zweiten Ausführungsbeispiel, weil das Verhältnis der Summe der Aluminium- und Kalziumoxidgruppe zur Summe der zugeschlagenen Metalloxide (hier FeO) im ersten Ausführungsbeispiel viel höher ist als im zweiten.

Da Aluminium- und Kalziumoxide zu den Basiselementen eines Mineralschaumes gehören, kann die Verkürzung der Aktivierungszeit der Bruchgrenzen nicht über deren Minimierung erfolgen, sondern nur über die Zugabe eines Additives. Im unteren Bereich der natürlichen $Al_2O_3$ + CaO-Gesamtgehalte ist die Aktivität weniger ausgeprägt, bei grossem Anteil dieser Elemente dagegen stärker. Demzufolge ist die zur Deaktivierung nötige Metalloxidmenge bei kleinen $Al_2O_3$ + CaO-Gesamtgehalten kleiner. Um über alle möglichen Verbindungen hinaus eine genügende Stabilisierung zu erreichen, sind mindestens folgende Additiv-Zuschläge vorzusehen: 1-6 Gew.-% Me, wobei Me = Fe und/oder Mn und/oder Cr und/oder Ti und/oder V. Fe kann dabei z. B. in Form von FeO und $Fe_2O_3$ vorliegen, Mn beispielsweise von MnO und $MnO_2$.

Die Einsatzgebiete der beschriebenen mineralischen Schäume sind sehr vielfältig. So kann z. B. der Mineralschaum aus Reststoffen im Hochbau eingesetzt werden.

Fig. 2 verdeutlicht ein derartiges Ausführungsbeispiel. Erfindungsgemässer Mineralschaum 1 wird direkt auf den ausgehobenen Untergrund (Rohplanie) 2 aufgeschüttet und mittels Verdichtungsgerät auf ca. das 1,3fache verdichtet. Falls notwendig, kann zwischen dem Untergrund 2 und der Mineralschaumschüttung 1 noch zusätzlich ein Vlies 5 eingebracht werden. Nach Abdeckung der Schüttung des Mineralschaumes 1 mit einer wasserundurchlässigen Folie 3 kann mit dem Betonieren begonnen werden. Die Beton-Bodenplatte 4 wird direkt auf der Folie 3 angeordnet. Somit entfällt durch das Aufschütten des Schaumes das sonst übliche Rohplanieren und der Einsatz von Magerbeton.

In einem weiteren nicht zeichnerisch dargestellten Ausführungsbeispiel wird durch eine Aufschüttung des mineralischen Schaumes mit Dichten von ca. 0,4 t/m$_3$ die Unterkonstruktion von Tiefgaragen oder anderen Gebäudeteilen wesentlich schlanker dimensioniert. Das Material isoliert, ist lagerstabil und widersteht Temperaturen von bis zu 1000 °C.

Mineralische Schäume aus Reststoffen sind auch im Tiefbau/Strassenbau gut einzusetzen. Sie dämmen bis zu 12 Mal besser als Kies. Durch die hohe Temperaturstabilität sind sie an Orten, wo Feuer ausbrechen kann, z. B. an Tankstellen und Umschlagplätzen für Chemikalien besonders gut einsetzbar. Durch die hohe Wärmedämmung fällt eine Kofferung erheblich dünner als sonst üblich aus. Das bedeutet geringere Aushubkosten, weniger Materialkosten, kürzere Bauzeiten bei gleichzeitig höherer Sicherheit. Das Material wird bei diesem Einsatz auf den Faktor 1,3 verdichtet.

Ausserdem ist mineralischer Schaum aus Reststoffen mit einem Hohlraumanteil von ca. 30-35 % überall dort einsetzbar, wo eine gute Sickerwasserabführung notwendig ist. Durch sein inertes Verhalten gegenüber aggressiven Medien wird er deshalb gut zur Abdichtung von Deponiekörpern verwendet, wo das Sikkerwasser gesammelt werden muss. Dabei schwemmt das Material in Folge des optimierten Bruchverhaltens nicht aus.

**Bezugszeichenliste**

1 Mineralschaum
2 Untergrund
3 Wasserundurchlässige Folie
4 Beton-Bodenplatte
5 Vlies

**Patentansprüche**

**1.** Oxidische Mineralzusammensetzung zur Herstellung eines temperaturbeständigen und verdichtbaren Mineralschaumes, gekennzeichnet durch (Angaben in Gew.-%):

10-32 Si
4-10 Al
2.5-15 Ca
1-12 Me, wobei Me = Fe und/oder Mn und/oder Cr und/oder Ti und/oder V
1-7.5 Na
0.5-5 Mg
0.3-8 K

Rest Sauerstoff und beliebige Begleitelemente in unbedeutenden Konzentrationen.

**2.** Mineralzusammensetzung nach Anspruch 1, gekennzeichnet durch (Angaben in Gew.-%):

10-32 Si
4-10 Al
2.5-15 Ca
1-10 Me, wobei Me = Fe und/oder Mn und/oder Cr und/oder Ti und/oder V
1-7.5 Na
0.5-5 Mg
0.3-8 K

Rest Sauerstoff und beliebige Begleitelemente in unbedeutenden Konzentrationen.

**3.** Mineralzusammensetzung nach Anspruch 1, gekennzeichnet durch (Angaben in Gew.-%):

10-20 Si
6-9.5 Al
2.5-12 Ca
1-6 Me, wobei Me = Fe und/oder Mn und/oder Cr und/oder Ti und/oder V
1-7.5 Na
0.5-3 Mg
2-8 K

Rest Sauerstoff und beliebige Begleitelemente in unbedeutenden Konzentrationen.

**4.** Mineralzusammensetzung nach einem der Ansprüche 1 bis 3, gekennzeichnet durch folgende totale Menge von Ca, Mg und Me, wobei Me = Fe und/oder Mn und/oder Cr und/oder Ti und oder V (Angaben in Gew.%): $22 \leq Ca+Mg+Fe \leq 35$.

**5.** Mineralzusammensetzung nach Anspruch 4, gekennzeichnet durch folgende totale Menge von Ca, Mg und Me (Angaben in Gew.%): $25 \leq Ca+Mg+Me \leq 35$.

**6.** Mineralzusammensetzung nach Anspruch 5, gekennzeichnet durch folgende totale Menge von Ca, Mg und Me (Angaben in Gew.%): $28 \le$ Ca+Mg+Me $\le 35$.

7. Mineralzusammensetzung nach einem der Ansprüche 1 bis 6, gekennzeichnet durch folgende totale Menge von Mn, Cr, V, Ti und Fe (Angaben in Gew. %):

$$1 \le Mn+Fe+Cr+Ti+V \le 8.$$

8. Mineralzusammensetzung nach einem der Ansprüche 1 bis 7, gekennzeichnet durch folgende totale Menge von Mn, Cr, V, Ti und Fe (Angaben in Gew. %):

$$1 \le Mn+Fe+Cr+Ti+V \le 5.$$

9. Mineralischer temperaturstabiler und verdichtbarer Schaum, welcher aus einer Mineralzusammensetzung nach einem der Ansprüche 1 bis 8 hergestellt ist.

10. Mineralischer Schaum nach Anspruch 9, gekennzeichnet durch eine Viskosität bei seiner Herstellung von 0.5-6 Pas.

11. Mineralischer Schaum nach Anspruch 9, gekennzeichnet durch eine Viskosität bei seiner Herstellung von 0.5-3 Pas.

12. Mineralischer Schaum nach Anspruch 9, gekennzeichnet durch eine Viskosität bei seiner Herstellung von 0.5-1.5 Pas.

13. Verwendung eines mineralischen Schaumes nach Anspruch 9 als Schüttung im Hochbau.

14. Verwendung eines mineralischen Schaumes nach Anspruch 9 als Schüttung im Tiefbau.

## Aktivität der Bruchgrenzen in Abhängigkeit der Mineralschaumzusammensetzung

Verhältnis (Al2O3+CaO)/ (Summe Metalloxide)

— Al2O3+CaO ca. 33%

— Al2O3+CaO ca. 28%

— Al2O3+CaO ca. 23%

Fig. 1

Fig. 2

EP 1 095 921 A1

**Europäisches Patentamt**

# EUROPÄISCHER RECHERCHENBERICHT

Nummer der Anmeldung

EP 00 81 0882

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 199, no. 813, 30. November 1998 (1998-11-30) & JP 10 218686 A (NKK CORP, ET AL.), 18. August 1998 (1998-08-18) * Zusammenfassung * --- | 1-3,9 | C04B38/00 |
| X | PATENT ABSTRACTS OF JAPAN vol. 016, no. 556 (C-1007), 26. November 1992 (1992-11-26) & JP 04 214083 A (TOKYO METROPOLIS) * Zusammenfassung * --- | 1-3,9 | |
| A | DE 25 14 993 A (RUDMARK HANS) 9. Oktober 1975 (1975-10-09) * Anspruch 1 * --- | 1-3,9 | |
| A | AT 317 071 B (THERMOCRETE) 15. November 1973 (1973-11-15) * Seite 4, Zeile 17-26 * --- | 1 | |
| A | EP 0 236 249 A (MERIDIONAL D OENOLOGIE SOCIETE) 9. September 1987 (1987-09-09) * Anspruch 1 * --- | 1-3,9 | RECHERCHIERTE SACHGEBIETE (Int.Cl.7)  C04B |
| A | EP 0 839 778 A (FILTEC KABUSHIKI KAISHA) 6. Mai 1998 (1998-05-06) * Anspruch 1 * --- | 1-3,9 | |
| A | PATENT ABSTRACTS OF JAPAN vol. 199, no. 902, 26. Februar 1999 (1999-02-26) & JP 10 297977 A (HOKKAIDO PREFECTURE) * Zusammenfassung * --- | 1-3,9 | |
| A | US 5 674 385 A (P. IVASCHENKO, ET AL) 26. November 1992 (1992-11-26) * Anspruch 13 * --- | 1-3,9 | |

-/--

Der vorliegende Recherchenbericht wurde für alle Patentansprüche erstellt

| Recherchenort | Abschlußdatum der Recherche | Prüfer |
|---|---|---|
| DEN HAAG | 13. Februar 2001 | Daeleman, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

<table>
<tr><td></td><td><strong>Europäisches<br>Patentamt</strong></td><td><strong>EUROPÄISCHER RECHERCHENBERICHT</strong></td><td><strong>Nummer der Anmeldung</strong><br><br>EP 00 81 0882</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | PATENT ABSTRACTS OF JAPAN<br>vol. 013, no. 372 (C-627),<br>17. August 1989 (1989-08-17)<br>& JP 01 126281 A (SHOWA DENKO KK)<br>* Zusammenfassung *<br>--- | | |
| A | GB 935 946 A (K. ENGELTHALER, ET AL.)<br>--- | | |
| A | CHEMICAL ABSTRACTS, vol. 118, no. 18,<br>3. Mai 1993 (1993-05-03)<br>Columbus, Ohio, US;<br>abstract no. 174513q,<br>A. COCCO:<br>Seite 353;<br>XP000352848<br>* Zusammenfassung *<br>& CERAM. INF.,<br>Bd. 26, Nr. 301, 1991, Seiten 209-211,<br>italy<br>----- | | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| DEN HAAG | 13. Februar 2001 | Daeleman, P |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie,übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 00 81 0882

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-02-2001

| Im Recherchenbericht angeführtes Patentdokument | Datum der Veröffentlichung | Mitglied(er) der Patentfamilie | Datum der Veröffentlichung |
|---|---|---|---|
| JP 10218686 A | 18-08-1998 | KEINE | |
| JP 04214083 A | 05-08-1992 | JP 2020091 C<br>JP 7042176 B | 19-02-1996<br>10-05-1995 |
| DE 2514993 A | 09-10-1975 | SE 382044 B<br>SE 7404661 A | 12-01-1976<br>09-10-1975 |
| AT 317071 B | 15-11-1973 | DD 104282 A<br>DE 2254750 A<br>FR 2178245 A<br>GB 1418534 A<br>IT 981802 B<br>US 3957528 A | 05-03-1974<br>08-11-1973<br>09-11-1973<br>24-12-1975<br>10-10-1974<br>18-05-1976 |
| EP 0236249 A | 09-09-1987 | FR 2593806 A | 07-08-1987 |
| EP 0839778 A | 06-05-1998 | JP 2899957 B<br>JP 10139564 A | 02-06-1999<br>26-05-1998 |
| JP 10297977 A | 10-11-1998 | JP 2958754 B | 06-10-1999 |
| US 5674385 A | 07-10-1997 | SU 1753945 A<br>SU 1746879 A<br>AU 1775792 A<br>WO 9220636 A | 07-08-1992<br>07-07-1992<br>30-12-1992<br>26-11-1992 |
| JP 01126281 A | 18-05-1989 | JP 8005732 B | 24-01-1996 |
| GB 935946 A | | KEINE | |

EPO FORM P0461

Für nähere Einzelheiten zu diesem Anhang : siehe Amtsblatt des Europäischen Patentamts, Nr.12/82